# FASCICULE DE BREVET EUROPEEN

(11) **EP 3 921 628 B1**
(45) Date de publication et mention de la délivrance du brevet: **23.11.2022**
(21) Numéro de dépôt: 19832418.8
(22) Date de dépôt: 30.12.2019
(51) Int. Cl.: G01N 21/77, G01N 21/80

(54) **PROCÉDÉ DE FABRICATION D'UN CAPTEUR DE MESURE DU PH À BASE DE FIBRE OPTIQUE ET SYSTÈME DE MESURE OPTIQUE DE PH COMPRENANT LEDIT CAPTEUR**
VERFAHREN ZUR HERSTELLUNG EINES AUF EINER OPTISCHEN FASER BASIERENDEN PH-SENSORS UND SYSTEM ZUR OPTISCHEN PH-MESSUNG MIT DIESEM SENSOR
METHOD OF FABRICATING AN OPTICAL FIBER BASED PH SENSOR AND SYSTEM FOR OPTICAL PH MEASUREMENT COMPRISING SAID SENSOR

(30) Priorité: 08.02.2019 FR 1901263
(43) Date de publication de la demande: 15.12.2021
(73) Titulaire: Université de Franche-Comté, 25030 Besançon (FR); Centre National de la Recherche Scientifique, 75016 Paris (FR)
(72) Inventeur: GAUTHIER-MANUEL, Bernard, 25000 Besançon (FR); KATEKLUM, Rutjaphan, Nonthaburi city, 11000 (TH)
(74) Mandataire: IPAZ
(86) Numéro de dépôt international: PCT/EP2019/087180
(87) Numéro de publication internationale: WO 2020/160835

(56) Documents cités:
- WO-A1-88/05533
- KATEKLUM RUTJAPHAN ET AL: "Improving the sensitivity of amino-silanized sensors using self-structured silane layers: Application to fluorescence pH measurement", SENSORS AND ACTUATORS B: CHEMICAL, ELSEVIER BV, NL, vol. 248, 10 avril 2017 (2017-04-10), pages 605-612, XP029995102, ISSN: 0925-4005, DOI: 10.1016/J.SNB.2017.04.049 cité dans la demande

## Description

La présente invention se rapporte à un procédé de fabrication d'un capteur d'ions à base d'une fibre optique. Elle concerne également un système de mesure optique du pH d'une solution en utilisant un capteur conçu selon le procédé de l'invention.

La présente invention trouve une application particulièrement intéressante dans la mesure du pH dans des systèmes biologiques de faible volume, mais elle est d'un cadre plus large puisqu'elle peut s'appliquer à la mesure de pH dans le domaine de la physico-chimie.

### ETAT DE LA TECHNIQUE

D'une façon générale, les besoins industriels actuels sont remplis par l'utilisation de pH-mètre à électrode de verre miniature ou pH-mètre à ISFET. Pour le premier, les volumes requis restent élevés pour une application dans le domaine biologique par exemple ; et pour le second il existe de nombreux problèmes liés à l'électrode de référence.

On connaît des capteurs de pH à fluorescence à base de fibre optique destinés à la mesure in vivo. De tels capteurs utilisent des molécules greffées à l'extrémité clivée d'une fibre optique ; les propriétés de fluorescence de ces molécules étant dépendantes du pH. Des molécules permettent de mesurer le pH en calculant le rapport de la fluorescence émise à deux longueurs d'onde distinctes. Cette technique ratiométrique nécessite une calibration (étalonnage) et les fabricants de molécules conseillent aux utilisateurs d'effectuer un étalonnage préalable en utilisant respectivement les points de terminaison acide et basique du titrage (« titration » en langue anglaise). Cette procédure d'étalonnage nécessite de contrôler très précisément les conditions expérimentales et prend beaucoup de temps pour les applications cliniques.

On connaît également la publication "Improving the sensitivity of aminosilanized sensors using self-structured silane layers: Application to fluorescence pH measurement", Rutjaphan Kateklum et al., avril 2017, Sensors and Actuators B, Vol. 248, pp. 605-612. Ce document décrit une méthode de fonctionnalisation d'une extrémité de fibre optique en appliquant une couche trifonctionnelle et une couche difonctionnelle. L'un des problèmes du processus de conception décrit dans cette publication est la durée et la complexité de conception.

On connaît également la publication « Calibration free and fluorescein based fiber optic pH sensor for clinical applications », Bernard Gauthier-Manuel et al., IEEE SENSORS, 28-31 octobre, New Delhi, 2018, Proceedings IEEE Sensors, ISBN: 978-1-5386-4707-3, Part Number: CFP18SEN-ART, pp. 1173-1176. Ce document décrit une méthode de calcul permettant d'obtenir une valeur de pH à partir de mesure de fluorescence. On connaît le document WO88/05533 A1 décrivant un capteur à base de fibre optique pour mesurer un paramètre chimique ou physiologique d'un tissu ou d'un fluide corporel. A une extrémité de la fibre est fixé un polymère qui comprend une pluralité de fragments photoactifs sélectionnées parmi un groupe comprenant des chromophores et des lumophores, les fragments photoactifs étant espacés entre eux de manière à réduire au minimum l'interaction chimique ou physique entre eux tout en optimisant leur densité. Dans un mode de réalisation, une chaîne polymère est liée de manière covalente aux fractions ou fragments photoactifs par l'intermédiaire de groupes fonctionnels tels que des esters, des amides ou autres. Dans un second mode de réalisation, une chaîne polymère possède une fluorescence inhérente et est formée à partir d'au moins une unité monomère.

La présente invention a pour but un nouveau procédé de fonctionnalisation rapide et simple d'une fibre optique clivée.

L'invention a encore pour but la réalisation d'une couche fonctionnalisée homogène et circonscrit à la zone de clivage.

Un autre but de l'invention est la conception d'un capteur pour lequel l'utilisation ne nécessite pas de calibration.

### EXPOSE DE L'INVENTION

On atteint au moins l'un des objectifs précités avec un procédé de fabrication d'un capteur d'ions à base d'une fibre optique, ce procédé comprenant les étapes suivantes :
- clivage de la fibre optique, des groupes hydroxyles libres apparaissant sur la surface clivée,
- greffage d'une couche de silane trifonctionnel directement sur des groupes hydroxyles libres ainsi apparus sur la surface clivée de la fibre optique, sans une étape préalable d'activation exogène,
- greffage d'une couche de silane difonctionnel sur la surface clivée de la fibre optique,
- greffage d'un colorant fluorescent.

Le procédé selon l'invention permet de réaliser une couche active qui est particulièrement homogène et propre sur la section clivée de la fibre optique. Une telle couche est facilement reproductible.

Contrairement à la technique classique de l'art antérieur qui consiste à générer des fonctions hydroxyles par activation exogène comme par exemple par utilisation d'un procédé UV-ozone ou d'un mélange piranha, le procédé selon l'invention permet de greffer directement le silane sur des groupes hydroxyles libres apparus suite au clivage. Les inventeurs se sont rendu compte de la présence spontanée des fonctions Si-OH libres lors du clivage. En effet, le clivage produit des groupes hydroxyles libres sur lesquels peuvent être greffés directement une couche de silane.

Il n'est plus nécessaire de réaliser, comme dans l'art antérieur, une opération d'activation par UV qui prenait beaucoup de temps et nécessitait des précautions contraignantes. Cette opération d'activation avait pour but la création des fonctions Si-OH libres sur l'extrémité de la fibre optique. Mais malheureusement, il était difficile de contrôler cette activation uniquement sur la section clivée (la surface de clivage) de la fibre optique.

Avec le procédé selon l'invention, on simplifie considérablement la procédure de greffage. Les molécules ne sont greffées que sur la surface de clivage à l'extrémité de la fibre clivée, seule zone active. Un capteur conçu de cette manière permet une mesure de pH sans calibration sur de très petits échantillons.

L'invention est notamment remarquable par le fait que la première étape de greffage consiste à réaliser une couche mince de silane trifonctionnel présentant des sites greffables. La seconde étape permet notamment de greffer un polymère linéaire de silane difonctionnel pour créer une couche active d'épaisseur désirée. En effet, le greffage sur une surface de silice nécessite deux fonctions. L'utilisation d'un silane difonctionnel ne peut générer que des monocouches, ce qui est insuffisant pour obtenir un signal de fluorescence utilisable. L'utilisation d'un silane trifonctionnel génère des multi couches denses qui ne pourront fixer les grosses molécules de colorant qu'à la surface, ce qui ne contribuera pas à l'augmentation significative du signal. Ainsi, les deux étapes de greffages selon l'invention permettent d'obtenir une couche apte à être fonctionnalisée en profondeur et un niveau de signal de fluorescence utilisable.

Selon l'invention, les étapes de greffage d'une couche de silane trifonctionnel et de greffage d'une couche de silane difonctionnel peuvent être réalisées de façon simultanée par un mélange contenant moins de 1% de silane trifonctionnel. Il est ainsi possible de réaliser une couche avec un mélange de silane difonctionnel et trifonctionnel mais avec une très faible proportion de trifonctionnel pour réticuler les chaînes de difonctionnel. Cela permet de former une structure de type gel au lieu d'une structure de type brosse lorsque les étapes sont distinctes et successives.

Un capteur est ainsi constitué par la fibre optique clivée comportant sur sa surface de clivage des molécules fluorescentes sensibles au pH.

Selon une caractéristique avantageuse de l'invention, le silane difonctionnel peut être un composé amino-silane permettant de constituer une surface de composés amines pour le greffage du colorant fluorescent.

En d'autres termes, le greffage s'effectue en deux phases. Dans une première phase on génère des fonctions amines par greffage d'un amino-silane. Dans une seconde phase on greffe les molécules fluorescentes comportant un radical réactif vis-à-vis d'un groupement amine.

La réaction entre les fonctions amines et les fonctions amino-sensibles du colorant fluorescent choisi permet la fixation covalente des molécules optiquement actives dans la couche de silane.

A titre d'exemple non limitatif, le greffage du colorant fluorescent peut être réalisé en utilisant une fonction ester succinimidylique comme agent de couplage avec la surface aminée.

Selon une caractéristique avantageuse de l'invention, le greffage du colorant fluorescent peut être réalisé en utilisant un chlorure de sulfonyle comme agent de couplage avec la surface aminée. On peut également utiliser un isothiocyanate comme agent de couplage avec la surface aminée.

Selon un mode de mise en œuvre de l'invention, le silane difonctionnel peut être un composé thiol permettant de constituer une surface de composés thiols pour le greffage du colorant fluorescent. On peut également utiliser un iodoacétamide ou un maléimide comme agent de couplage avec la surface de composés thiols.

Il a été constaté que les fonctions hydroxyles libres obtenues après clivage ont tendance à disparaître au bout d'un certain temps.

Selon un mode de réalisation avantageux de l'invention, l'étape de greffage de la couche de silane trifonctionnel peut être réalisée dans un temps inférieur à 1 minute ou dans les 30 minutes suivant le clivage de la fibre optique. En d'autres termes, le greffage de silane trifonctionnel est réalisé le plus rapidement possible pour disposer du maximun de fonctions SiOH libres.

On peut même envisager de réaliser ce greffage dans l'heure suivant le clivage.

Il s'agit en fait de réaliser le greffage sur une surface fraîchement clivée, c'est-à-dire dans une durée prédéterminée pendant laquelle des fonctions hydroxyles apparues de manière spontanée sont encore libres. Par expérience, on peut déterminer à partir de quel moment après le clivage, le taux de fonctions hydroxyles libres n'est plus suffisant pour réaliser un greffage efficace de couche mince de silane trifonctionnel. Cette détermination est obtenue en fonction notamment du type de fibre optique, de la température ambiante, et de l'environnement.

Selon une caractéristique avantageuse de l'invention, la fibre optique présente une teneur en ions hydroxyles supérieure à 10 ppm, de préférence entre 100 et 1200 ppm.

Plus généralement, il s'agit d'une fibre optique dite à haute concentration en ions hydroxyles OH. Avec une telle fibre optique, on s'assure d'avoir une grande concentration de fonctions hydroxyles libres lors du clivage.

Selon un mode de réalisation, le silane peut comprendre au moins un radical réactif du groupe C1-10alkoxy, tel que par exemple l'ethoxy, le methoxy, le propoxy, ou le butoxy.

Selon une mode de réalisation de l'invention, le silane peut comprendre au moins un radical réactif à base d'atomes halogènes tels que par exemple le fluor, le chlore, le brome,...

Selon un autre aspect de l'invention, il est proposé un système de mesure optique de pH d'une solution, comprenant :
- un capteur d'ions à base d'une fibre optique fabriqué par un procédé tel que décrit ci-dessus, le colorant fluorescent étant greffé sur une première extrémité de la fibre optique,
- une source lumineuse pour exciter le colorant fluorescent depuis une seconde extrémité et via la fibre optique,
- un spectromètre pour recueillir un signal de fluorescence provenant du colorant fluorescent via la seconde extrémité, et
- une unité de traitement pour déterminer le pH de la solution.

### DESCRIPTION DES FIGURES ET MODES DE REALISATION

D'autres avantages et caractéristiques apparaîtront à l'examen de la description détaillée d'exemples de réalisation nullement limitatifs, et des dessins annexés sur lesquels :
[Fig. 1] est un organigramme illustrant différentes étapes du procédé de fonctionnalisation d'une fibre optique selon l'invention ;
[Fig. 2] est une représentation schématique d'une vue en coupe d'une extrémité de fibre optique après clivage selon l'invention ;
[Fig. 3] est une représentation schématique d'une vue en coupe de l'extrémité de la fibre optique de la figure 2 sur laquelle un greffage trifonctionnel a été réalisé ;
[Fig. 4] est une représentation schématique d'une vue en coupe de l'extrémité de la fibre optique de la figure 3 sur laquelle un greffage de chaines difonctionnelles a été réalisé ;
[Fig. 5] est une représentation schématique d'un processus chimique lors d'un greffage de molécules fluorescente sur l'extrémité de la fibre optique de la figure 4 ; et
[Fig. 6] est une représentation schématique d'un système de mesure optique de pH selon l'invention.

Bien que l'invention n'y soit pas limitée, on peut maintenant décrire un procédé de fonctionnalisation d'une fibre optique selon l'invention en utilisant une fonction ester succinimidylique comme agent de couplage avec une surface d'amino-silane.

D'une façon générale, le silane trifonctionnel et le silane difonctionnel sont préparés en amont en solutions qui sont ensuite utilisées avec un grand nombre de fibres optiques. Par exemple, on peut utiliser un flacon en polypropylène que l'on fixe dans une bouteille en verre. On remplit le flacon d'une solution de silane trifonctionnel. Avantageusement, un des adjuvants du polypropylène agit comme catalyseur. On peut également utiliser du toluène comme solvant et atteindre un pH de 2. D'autres solvants peuvent être utilisés. L'ensemble bouteille et flacon est ensuite placé dans un congélateur afin d'interrompre la polymérisation.

De la même manière on remplit un autre flacon du silane difonctionnel. Ce flacon est fixé à une autre bouteille en verre. L'ensemble passe au four à 60° pour quelques heures. La durée d'enfournement dépend de la longueur souhaitée des chaînes de silane, en fait du nombre de groupements NH₂ souhaités. L'ensemble bouteille et flacon est ensuite placé dans un congélateur afin d'interrompre la polymérisation.

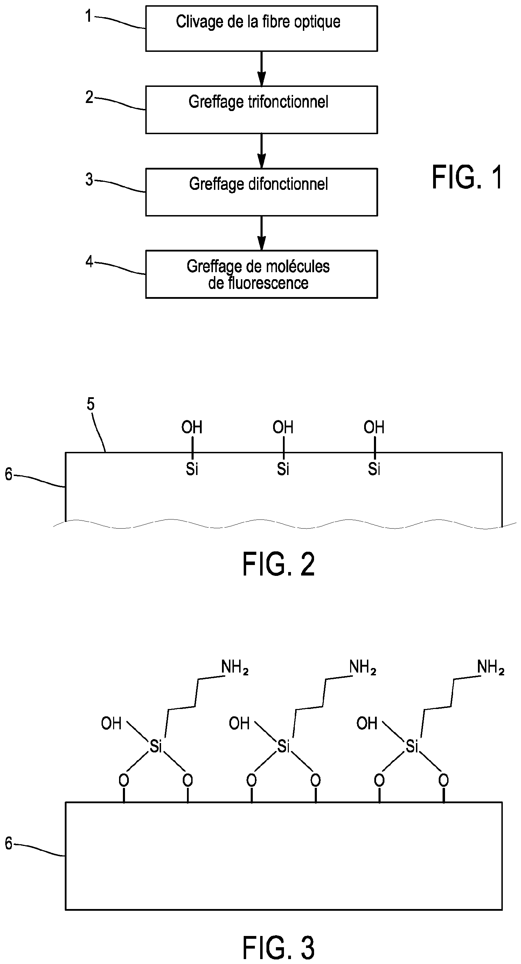

La figure 1 est un organigramme illustrant différentes étapes du procédé de fonctionnalisation d'une fibre optique selon l'invention. On distingue quatre étapes : clivage, greffage trifonctionnelle, greffage difonctionnelle, et greffage de molécules fluorescentes. Nous allons reprendre ci-dessous ces différentes étapes en référence aux figures 1 à 5.

A l'étape 1, on dénude et on clive l'extrémité de la fibre optique. Après avoir préalablement décongelé la solution de silane trifonctionnel, on plonge l'extrémité de la fibre optique fraichement clivée dans la solution de silane trifonctionnel lors d'une étape 2 de greffage trifonctionnel.

Comme on le voit sur la figure 2, des ions hydroxyles libres OH sont spontanément présents sur la surface clivée 5 de la fibre optique 6 et restent disponibles pendants un certain temps. Pour ce faire, on utilise une fibre optique multimode à saut d'indice présentant une teneur en ions OH supérieure à 10 ppm. Une haute teneur en ions.

Dans le cas présent, quelques minutes seulement séparent l'étape 1 de clivage de l'étape 2 de greffage du silane trifonctionnel de sorte que pendant cette durée de quelques minutes, un minimum de fonctions hydroxyles OH libres sont perdues par liaison avec des contaminants de l'atmosphère. Il n'est pas nécessaire de réaliser une activation par rayons UV-ozone ou par utilisation d'un mélange piranha ou toute autre méthode. L'étape 2 de greffage du silane trifonctionnel est réalisée à température ambiante pendant quelques minutes. Cela suffit pour former complètement la couche mince trifonctionnelle.

Avantageusement, les greffages trifonctionnels et difonctionnels utilisent le silane. Une molécule de silane se compose de trois parties. Une première partie formée par l'atome de silicium comportant 1, 2 ou 3 liaisons avec une deuxième partie comprenant un radical réactif R pouvant être un groupe alcoxyl, des atomes halogènes ou un groupe hydroxyle. Par exemple le groupe alcoxyl peut comprendre un groupe éthoxyl -OCH₂CH₃, un groupe méthoxyl -OCH₃ on parle alors d'alcoxysilane, et les atomes halogènes peuvent comprendre un chlorure - Cl, on parle alors de chlorosilane.

La troisième partie est la ou les liaisons restantes de l'atome de silicium avec un atome de carbone d'une chaîne aliphatique dénommée espaceur qui se termine par un groupe fonctionnel (-SH, -NH2, COOH, -CH3, -OH...) déterminant les propriétés du produit final. La longueur de cet espaceur est variable et peut même être supprimée comme par exemple dans le triethoxysilane.

Le nombre des radicaux réactif R définit le nombre de liaisons Si-O-Si qu'il est possible de réaliser lors de la réaction de greffage. Une surface de silice nécessite deux liaisons de ce type pour attacher correctement l'atome de silicium. Donc l'utilisation d'un silane difonctionnel (deux groupes fonctionnels) ne pourra conduire qu'à la création d'une monocouche. Pour faire croître l'épaisseur de la couche greffée, on utilise avantageusement un silane trifonctionnel (trois groupes fonctionnels) pour créer la première couche greffée et disposer ainsi d'une fonction supplémentaire.

Sur la figure 3, on voit que les molécules d'amino-silane se sont liées à des atomes d'oxygène des groupes OH qui étaient libres tout de suite après clivage. Un tel arrangement propose théoriquement comme disponible un radical R comme par exemple un radical amine NH₂ et un radical OH sur lequel viendra se greffer un amino-silane difonctionnel.

A l'étape 3 sur la figure 1, la fibre optique est ensuite plongée dans la solution de silane difonctionnel pendant quelques heures à température ambiante. De la même manière il n'est pas nécessaire de placer l'ensemble dans un four. Ensuite, la fibre optique est rincée dans le toluène et dans le DMSO (Diméthylsulfoxyde). Ce dernier étant utilisé pour nettoyer tout ce qui ne s'est pas greffé de façon covalente.

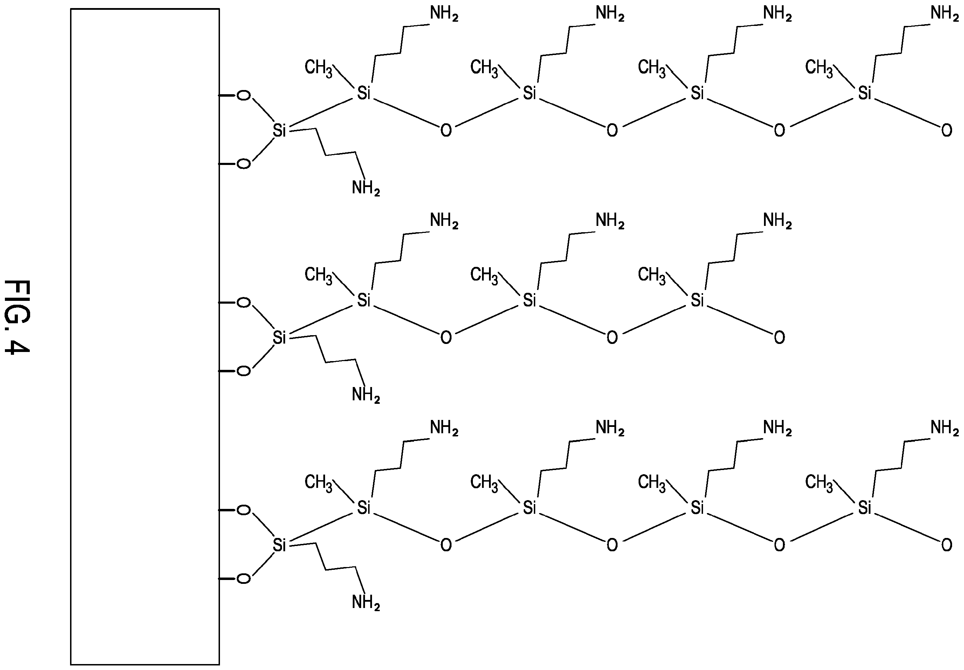

Sur la figure 4, les chaînes de molécules du polymère linéaire d'amino-silane difonctionnel entrent en contact avec la couche tri-fonctionnelle et se lient à celles-ci par liaison covalente. Les chaînes courtes se lient plus rapidement que les chaînes longues. On constate que les fonctions amines NH₂ sont disponibles. La couche n'est pas développée sur les parois latérales de la fibre. Comme la couche trifonctionnelle n'existe qu'au bout de la fibre, sur la section clivée, la couche difonctionnelle se développe principalement, voire uniquement, sur cette section. Les parois latérales de la fibre optique 6 sur la figure 4 peuvent éventuellement recevoir quelques chaines de silanes mais la couche se développe dans le prolongement de la fibre optique, à son extrémité, sur la surface clivée.

A l'étape 4 sur la figure 1, la fibre optique est plongée dans une solution de molécules fluorescentes de façon à greffer de façon covalente suffisamment de molécules fluorescentes sur toutes les fonctions amines NH₂ disponibles. Cette étape 4 peut durer plusieurs heures ou moins, par exemple six heures. A la fin, on nettoie éventuellement la fibre optique à l'eau, puis on la rince. On peut également effectuer un rincage avec du DMSO (dimethylsulfoxide) qui élimine toutes les molécules non liées par des liaisons covalentes au support.

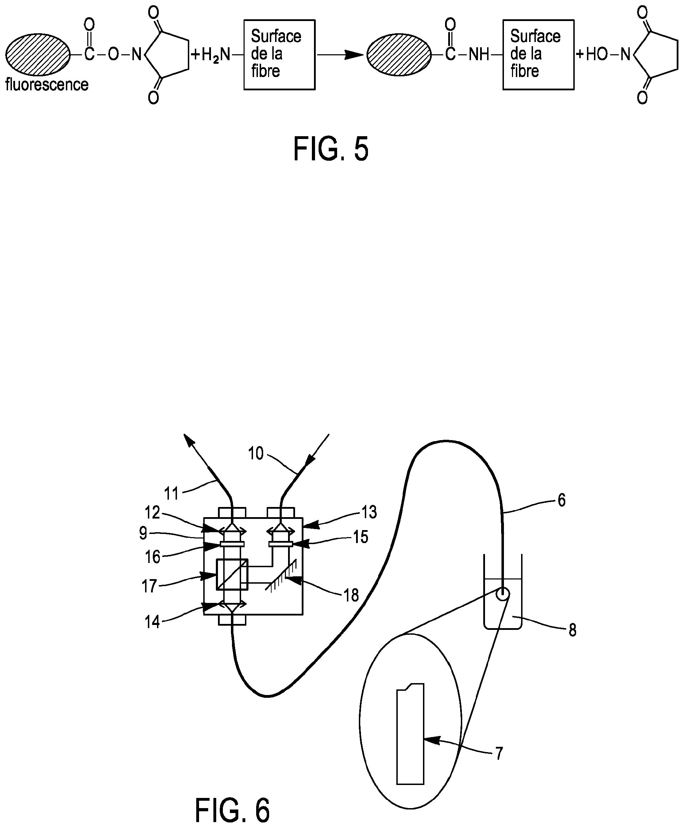

La figure 5 est une équation chimique illustrant le greffage de molécules de fluorescence sur la couche difonctionnelle. On utilise par exemple une fonction ester succinimidylique comme agent de couplage avec la surface aminée. Cet ester comporte un fluorophore tel que par exemple la fluorescéine diacétate. La combinaison avec la surface aminée permet d'obtenir une surface portant le fluorophore via une liaison CONH. Encore une fois, le développement de la couche se fait principalement sur la surface de clivage, ce qui permet d'obtenir une zone active distribuée le long des chaines difonctionnelles. Cela améliore le rendement de la détection de la fluorescence.

Plusieurs fluorophores peuvent être utilisés. Dans l'exemple décrit, la couche de silane présente des groupes amines disponibles. Différents agents de couplage entre le fluorophore et la surface aminée peuvent être utilisés comme par exemple :
- une fonction ester succinimidylique comme décrit ci-dessus,
- un chlorure de sulfonyle,
- une fonction isothiocyanate,
- ...

On peut également avoir à la place des fonctions amines des fonctions thiolées HS sur laquelle seront greffées des molécules réactives à des thiols. On peut par exemple utiliser comme agent de couplage :
- l'iodoacétamide,
- le maléimide,
- ...

Ces listes ne sont pas exhaustives et d'autres molécules peuvent être utilisées : le 7-Hydroxycoumarin-3-carboxylic acid N-succinimidyl ester (greffable sur surface aminée ) ou encore le pHrodo iFL Red STP Ester (greffable sur surface aminée).

On va maintenant décrire en référence à la figure 6, un système de mesure optique de pH d'une solution en utilisant la fibre optique conçue selon le procédé de l'invention. On distingue la fibre optique 6 selon l'invention présentant un diamètre de 200 µm par exemple et dont l'extrémité libre comporte une couche fonctionnalisée 7. Il s'agit d'une couche comportant des molécules fluorescentes qui sont sensibles au pH de la solution 8 à mesurer. L'autre extrémité de la fibre 6 est connectée à un séparateur de faisceaux. Ce dernier est relié à une voie d'excitation 10 et une voie de mesure 11. La voie d'excitation 11 est destinée à recevoir un signal d'excitation provenant d'un laser à 488 nm (non représenté). La voie de mesure est destinée à transmettre vers un spectromètre (non représenté) le signal de fluorescence provenant de la couche fonctionnalisée 7.

Les molécules sont directement excitées par la lumière émise par la fibre optique 6 à la longueur d'onde choisie. La fluorescence est collectée par cette même fibre et transmise au spectromètre via le séparateur de faisceaux 9. Ce dernier est équipé d'un prisme dichroïque 17 filtrant la raie d'émission pour ne renvoyer que le signal de fluorescence vers le spectromètre. On distingue également dans le séparateur de faisceaux 9 des lentilles de collimation 12-14, un filtre d'excitation 15 pour avoir un signal d'excitation le plus propre possible, et un filtre d'émission 16 pour le signal allant vers le spectromètre. Un miroir 18 est disposé entre le filtre d'excitation 15 et le prisme dichroïque 17 de façon à orienter le faisceau d'excitation vers ce prisme dichroïque.

La fibre optique 6 sert à la fois de capteur pH, de canal d'excitation véhiculant un signal d'excitation des molécules fluorescentes greffées à son extrémité, et de canal d'émission véhiculant la lumière émise par les molécules fluorescentes.

L'estimation de la valeur de pH peut se faire de différentes manières par exemple au moyen d'un protocole utilisant la forme du spectre de fluorescence, c'est-à-dire la totalité des points de mesure fournie par le spectromètre.

Ce protocole peut être mis en place par exemple lorsqu'on utilise des molécules de fluorescéine diacétate, un fluorophore courant bon marché, stable et possédant un rendement quantique élevé (0,93). Lorsque la valeur du pH environnant croit, la molécule de fluorescéine diacétate se déprotone plus ou moins conduisant à quatre espèces (forme cationique, neutre, anionique et dianionique). Il faut donc trois lois d'action de masse caractérisées par différents pKa (2,2 ; 4,3 et 6,38) pour calculer les concentrations de chaque espèce. Seules les espèces anioniques et dianioniques sont fluorescentes. Les autres sont converties, dans une certaine proportion, en forme anionique et participent de ce fait à la fluorescence. Le présent protocole peut être appliqué en se référant à la publication « Calibration free and fluorescein based fiber optic pH sensor for clinical applications", Bernard Gauthier-Manuel et al., IEEE SENSORS, 28-31 octobre, New Delhi, 2018, Proceedings IEEE Sensors, ISBN: 978-1-5386-4707-3, Part Number: CFP18SEN-ART, pp. 1173-1176.

De façon générale, le principe est d'obtenir une fonction mathématique Fluo (λ, pH, pKa'₁, pKa'₂, pKa'₃ ) représentant le spectre de fluorescence de la fluorescéine greffée ne dépendant que de la longueur d'onde λ, du pH et des trois constantes d'acidité apparentes pKa'₁, pKa'₂, pKa'₃ ... qui sont fonction de l'environnement vu par les molécules greffées. Un simple ajustement d'un spectre mesuré avec la fonction k*Fluo() donnera la valeur du pH vue par le capteur ainsi que les valeurs des pKa', le paramètre k rendant compte de la concentration en molécules fluorescentes en extrémité de fibre.

La présente invention permet donc la mesure du pH dans des systèmes biologiques ou physico-chimiques, mais elle peut aussi s'appliquer à la mesure d'ions tels que des ions Ca⁺⁺, Mg⁺⁺,...

Bien sûr, l'invention n'est pas limitée aux exemples qui viennent d'être décrits et de nombreux aménagements peuvent être apportés à ces exemples sans sortir du cadre de l'invention tel que défini par les revendications suivantes.

## Revendications

1. Procédé de fabrication d'un capteur d'ions à base d'une fibre optique, ce procédé comprenant les étapes suivantes :
- clivage de la fibre optique (6), des groupes hydroxyles libres apparaissant sur la surface clivée (5),
- greffage d'une couche de silane trifonctionnel directement sur des groupes hydroxyles libres ainsi apparus sur la surface clivée de la fibre optique, sans une étape préalable d'activation exogène,
- greffage d'une couche de silane difonctionnel sur la surface clivée de la fibre optique,
- greffage d'un colorant fluorescent.

2. Procédé selon la revendication 1, le silane difonctionnel étant un composé amino-silane permettant de constituer une surface de composés amines pour le greffage du colorant fluorescent.

3. Procédé selon la revendication 2, le greffage du colorant fluorescent étant réalisé en utilisant une fonction ester succinimidylique comme agent de couplage avec la surface aminée.

4. Procédé selon la revendication 2, le greffage du colorant fluorescent étant réalisé en utilisant un chlorure de sulfonyle comme agent de couplage avec la surface aminée.

5. Procédé selon la revendication 2, le greffage du colorant fluorescent étant réalisé en utilisant une fonction isothiocyanate comme agent de couplage avec la surface aminée.

6. Procédé selon la revendication 1, le silane difonctionnel étant un composé thiol permettant de constituer une surface de composés thiols pour le greffage du colorant fluorescent.

7. Procédé selon la revendication 6, le greffage du colorant fluorescent étant réalisé en utilisant un iodoacétamide comme agent de couplage avec la surface de composés thiols.

8. Procédé selon la revendication 6, le greffage du colorant fluorescent étant réalisé en utilisant un maléimide comme agent de couplage avec la surface de composés thiols.

9. Procédé selon l'une quelconque des revendications précédentes, l'étape de greffage de la couche de silane trifonctionnel étant réalisée dans les 30 minutes suivant le clivage de la fibre optique.

10. Procédé selon la revendication 9, l'étape de greffage de la couche de silane trifonctionnel étant réalisée dans un temps inférieur à 1 minute suivant le clivage de la fibre optique.

11. Procédé selon l'une quelconque des revendications précédentes, la fibre optique présentant une teneur en ions hydroxyles supérieure à 10 ppm, de préférence entre 100 et 1200 ppm.

12. Procédé selon l'une quelconque des revendications précédentes, le silane comprenant au moins un radical réactif du groupe Ci-ioalkoxy.

13. Procédé selon l'une quelconque des revendications précédentes, le silane comprenant au moins un radical réactif ethoxy ou méthoxy.

14. Procédé selon l'une quelconque des revendications 1 à 11, le silane comprenant au moins un radical réactif à base d'atomes halogènes.

15. Procédé selon l'une quelconque des revendications précédentes, les étapes de greffage d'une couche de silane trifonctionnel et de greffage d'une couche de silane difonctionnel étant réalisées de façon simultanée par un mélange contenant moins de 1% de silane trifonctionnel.

16. Système de mesure optique de pH d'une solution, comprenant :
- un capteur d'ions à base d'une fibre optique fabriqué par un procédé selon l'une quelconque des revendications précédentes, le colorant fluorescent étant greffé sur une première extrémité de la fibre optique,
- une source lumineuse pour exciter le colorant fluorescent depuis une seconde extrémité et via la fibre optique,
- un spectromètre pour recueillir un signal de fluorescence provenant du colorant fluorescent via la seconde extrémité, et
- une unité de traitement pour déterminer la teneur en pH de la solution.

## Patentansprüche

1. Verfahren zur Herstellung eines Ionensensors auf Basis einer optischen Faser, wobei das Verfahren die folgenden Schritte umfasst:
- Aufspaltung der optischen Faser (6), wobei freie Hydroxylgruppen auf der Spaltoberfläche (5) auftreten,
- Aufbringung einer Schicht aus trifunktionellem Silan direkt auf freie Hydroxylgruppen, die auf diese Weise auf der Spaltoberfläche der optischen Faser entstanden sind, ohne einen vorherigen Schritt einer exogenen Aktivierung,
- Aufbringung einer Schicht aus difunktionellem Silan auf die Spaltoberfläche der optischen Faser,
- Aufbringung eines Fluoreszenzfarbstoffs.

2. Verfahren nach Anspruch 1, wobei das difunktionelle Silan eine Aminosilanverbindung ist, die es ermöglicht, eine Oberfläche aus Aminverbindungen für die Aufbringung des Fluoreszenzfarbstoffs zu bilden.

3. Verfahren nach Anspruch 2, wobei die Aufbringung des Fluoreszenzfarbstoffs unter Verwendung einer Succinimidylesterfunktion als Mittel zur Kopplung mit der Amino-Oberfläche durchgeführt wird.

4. Verfahren nach Anspruch 2, wobei die Aufbringung des Fluoreszenzfarbstoffs unter Verwendung eines Sulfonylchlorids als Mittel zur Kopplung mit der Amino-Oberfläche durchgeführt wird.

5. Verfahren nach Anspruch 2, wobei die Aufbringung des Fluoreszenzfarbstoffs unter Verwendung einer Isothiocyanatfunktion als Mittel zur Kopplung mit der Amino-Oberfläche durchgeführt wird.

6. Verfahren nach Anspruch 1, wobei das difunktionelle Silan eine Thiolverbindung ist, die es ermöglicht, eine Oberfläche aus Thiolverbindungen für die Aufbringung des Fluoreszenzfarbstoffs zu bilden.

7. Verfahren nach Anspruch 6, wobei die Aufbringung des Fluoreszenzfarbstoffs unter Verwendung eines lodoacetamids als Mittel zur Kopplung mit der Oberfläche aus Thiolverbindungen durchgeführt wird

8. Verfahren nach Anspruch 6, wobei die Aufbringung des Fluoreszenzfarbstoffs unter Verwendung eines Maleimids als Mittel zur Kopplung mit der Oberfläche aus Thiolverbindungen durchgeführt wird.

9. Verfahren nach einem der vorhergehenden Ansprüche, wobei der Schritt der Aufbringung der trifunktionellen Silanschicht innerhalb von 30 Minuten nach der Aufspaltung der optischen Faser durchgeführt wird.

10. Verfahren nach Anspruch 9, wobei der Schritt der Aufbringung der trifunktionellen Silanschicht innerhalb einer Zeitspanne von weniger als 1 Minute nach der Aufspaltung der optischen Faser durchgeführt wird

11. Verfahren nach einem der vorhergehenden Ansprüche, wobei die optische Faser einen Gehalt an Hydroxylionen von mehr als 10 ppm, vorzugsweise zwischen 100 und 1200 ppm, aufweist.

12. Verfahren nach einem der vorhergehenden Ansprüche, wobei das Silan mindestens einen reaktiven Rest der C₁₋₁₀-Alkoxygruppe umfasst.

13. Verfahren nach einem der vorhergehenden Ansprüche, wobei das Silan mindestens einen reaktiven Ethoxy- oder Methoxy-Rest umfasst.

14. Verfahren nach einem der Ansprüche 1 bis 11, wobei das Silan mindestens einen reaktiven Rest auf Halogenatombasis umfasst.

15. Verfahren nach einem der vorhergehenden Ansprüche, wobei die Schritte der Aufbringung einer Schicht aus trifunktionellem Silan und der Aufbringung einer Schicht aus difunktionellem Silan zusammen mit einer Mischung durchgeführt werden, die weniger als 1 % trifunktionelles Silan enthält.

16. System zur optischen Messung des pH-Werts einer Lösung, umfassend:
- einen Ionensensor auf Basis einer optischen Faser, der durch ein Verfahren nach einem der vorhergehenden Ansprüche hergestellt wurde, wobei der Fluoreszenzfarbstoff auf ein erstes Ende der optischen Faser aufgebracht ist,
- eine Beleuchtungsquelle zum Anregen des Fluoreszenzfarbstoffs ausgehend von einem zweiten Ende und durch die optische Faser,
- ein Spektrometer zum Erfassen eines Fluoreszenzsignals von dem Fluoreszenzfarbstoff über das zweite Ende, und
- eine Verarbeitungseinheit zum Bestimmen des pH-Gehalts der Lösung.

## Claims

1. Method for manufacturing an ion sensor based on an optical fibre, this method comprising the following steps:
- cleavage of the optical fibre (6), with free hydroxyl groups appearing on the cleaved surface (5),
- grafting a layer of trifunctional silane directly on free hydroxyl groups having thus appeared on the cleaved surface of the optical fibre, without a prior exogenous activation step,
- grafting a layer of difunctional silane on the cleaved surface of the optical fibre,
- grafting a fluorescent dye.

2. Method according to claim 1, the difunctional silane being an amino-silane compound making it possible to constitute a surface of amine compounds for grafting the fluorescent dye.

3. Method according to claim 2, grafting the fluorescent dye being carried out by using a succinimidyl ester function as coupling agent with the aminated surface.

4. Method according to claim 2, grafting the fluorescent dye being carried out by using a sulfonyl chloride as coupling agent with the aminated surface.

5. Method according to claim 2, grafting the fluorescent dye being carried out by using an isothiocyanate function as coupling agent with the aminated surface.

6. Method according to claim 1, the difunctional silane being a thiol compound making it possible to constitute a surface of thiol compounds for grafting the fluorescent dye.

7. Method according to claim 6, grafting the fluorescent dye being carried out by using an iodoacetamide as coupling agent with the surface of thiol compounds.

8. Method according to claim 6, grafting the fluorescent dye being carried out by using a maleimide as coupling agent with the surface of thiol compounds.

9. Method according to any one of the preceding claims, the step of grafting the layer of trifunctional silane being carried out within the 30 minutes following cleavage of the optical fibre.

10. Method according to claim 9, the step of grafting the layer of trifunctional silane being carried out within a period of time of less than 1 minute following cleavage of the optical fibre.

11. Method according to any one of the preceding claims, the optical fibre having a hydroxyl ion content greater than 10 ppm, preferably between 100 and 1200 ppm.

12. Method according to any one of the preceding claims, the silane comprising at least one reactive radical of the C₁₋₁₀ alkoxy group.

13. Method according to any one of the preceding claims, the silane comprising at least one ethoxy or methoxy reactive radical.

14. Method according to any one of claims 1 to 11, the silane comprising at least one reactive radical based on halogen atoms.

15. Method according to any one of the preceding claims, the steps of grafting a layer of trifunctional silane and grafting a layer of difunctional silane being carried out simultaneously by a mixture containing less than 1% trifunctional silane.

16. System for optical measurement of pH of a solution, comprising:
- an ion sensor based on an optical fibre manufactured according to a method according to any one of the preceding claims, the fluorescent dye being grafted on a first end of the optical fibre,
- a light source for exciting the fluorescent dye from a second end and via the optical fibre,
- a spectrometer for obtaining a fluorescence signal originating from the fluorescent dye via the second end, and
- a processing unit for determining the pH content of the solution.
